# EUROPÄISCHE PATENTSCHRIFT

(11) **EP 1 890 903 B1**
(45) Veröffentlichungstag und Bekanntmachung des Hinweises auf die Patenterteilung: **23.11.2011**
(21) Anmeldenummer: 06754874.3
(22) Anmeldetag: 27.04.2006
(51) Int. Cl.: B60K 31/00

(54) **ADAPTIVER GESCHWINDIGKEITSREGLER MIT SITUATIONSABHÄNGIGER DYNAMIKANPASSUNG**
ADAPTIVE SPEED CONTROLLER WITH SITUATION-DEPENDENT DYNAMIC MATCHING
REGULATEUR DE VITESSE ADAPTATIF AVEC ADAPTATION DE DYNAMIQUE EN FONCTION DE LA SITUATION

(30) Priorität: 07.06.2005 DE 102005026065
(43) Veröffentlichungstag der Anmeldung: 27.02.2008
(73) Patentinhaber: ROBERT BOSCH GMBH, 70442 Stuttgart (DE)
(72) Erfinder: HAGEMANN Markus, 70839 Gerlingen (DE); SCHWINDT Olivier, 71277 Rutesheim (DE)
(86) Internationale Anmeldenummer: PCT/EP2006/061863
(87) Internationale Veröffentlichungsnummer: WO 2006/131421

(56) Entgegenhaltungen:
- EP-A- 0 906 845
- EP-A- 1 426 911
- DE-A1- 10 226 143
- DE-A1- 19 600 734
- DE-A1- 19 748 424
- US-A1- 2004 078 133

## Beschreibung

### Stand der Technik

Die Erfindung betrifft einen adaptiven Geschwindigkeitsregler mit einer Erkennungseinrichtung zur Erkennung verschiedener vorgegebener Kategorien von Fahrtsituationen und zur Auswahl eines an die erkannte Situation angepassten Dynamikprofils.

Für Kraftfahrzeuge sind adaptive Geschwindigkeitsregler bekannt, die nicht nur eine automatische Regelung der Fahrgeschwindigkeit auf eine vom Fahrer gewählte Wunschgeschwindigkeit erlauben, sondern auch eine automatische Geschwindigkeitsanpassung und Abstandsregelung in den Fällen, in denen sich auf der eigenen Fahrspur ein langsameres vorausfahrendes Fahrzeug befindet, das beispielsweise mit Hilfe eines Radarsystems geortet wird. Anhand der vom Radarsystem gelieferten Abstands- und Relativgeschwindigkeitsdaten berechnet der Regler eine positive oder negative Sollbeschleunigung, die dann durch einen entsprechenden Eingriff in das Antriebssystem und erforderlichenfalls auch das Bremssystem des Fahrzeugs umgesetzt wird, so daß das vorausfahrende Fahrzeug in einem angemessenen Sicherheitsabstand verfolgt wird. Dieser Sicherheitsabstand ist in der Regel zeitabhängig und wird über die sogenannte Zeitlücke definiert, d. h., den zeitlichen Abstand zwischen dem vorausfahrenden Fahrzeug und dem eigenen Fahrzeug.

Im Hinblick auf eine möglichst komfortable und kraftstoffsparende Fahrweise sind die bei dem Betrieb des Geschwindigkeitsreglers zugelassenen Sollbeschleunigungen auf einen vorgegebenen Beschleunigungsbereich begrenzt. Die obere Grenze dieses Beschleunigungsbereichs und die Zeitlücke sind Beispiele für Parameter, die das Dynamikprofil des Geschwindigkeitsreglers bestimmen. Bei hoher Dynamik werden höhere Beschleunigungen zugelassen, und die Sollzeitlücke ist auf einen relativ niedrigen Wert eingestellt.

Die Parameter, die das Dynamikprofil bestimmen, sind entweder im System fest vorgegeben oder durch den Fahrer nach Wunsch einstellbar. Beispielsweise sind ACC-Systeme bekannt, bei denen der Fahrer die Sollzeitlücke entsprechend seiner persönlichen Vorliebe in einem Bereich zwischen 1 und 2 Sekunden wählen kann. Ebenso sind Systeme bekannt, bei denen der Fahrer zwischen vorgegebenen Dynamikprofilen (z. B. "sportlich" oder "kraftstoffsparend") wählen kann, die jeweils durch einen speziellen Satz von Parametern bestimmt sind. Bei einigen Systemen kann das Dynamikprofil auch anhand einer automatischen Fahrererkennung an die Vorlieben des jeweiligen Fahrers angepaßt werden.

Aus DE 198 43 395 A1 ist ein adaptiver Geschwindigkeitsregler bekannt, bei dem auch eine automatische Anpassung des Dynamikprofils an die jeweilige Verkehrssituation vorgesehen ist. Unterschieden wird hier beispielsweise zwischen den Verkehrssituationen: Normalfahrt auf. Autobahnen, Überholen auf Autobahnen, Normalfahrt auf Landstraßen, Überholen auf Landstraßen, Normalfahrt im Stadtverkehr, Überholen im Stadtverkehr und Stop and Go. Darüber hinaus wird in dieser Druckschrift auch die Möglichkeit erwähnt, auf Daten eines Navigationssystems zuzugreifen, so daß beispielsweise vor einem kurvenreichen Streckenabschnitt automatisch auf eine geringere Dynamik umgeschaltet werden kann.

Die bisher im Einsatz befindlichen ACC-Systeme sind generell für Fahrten auf Autobahnen oder gut ausgebauten Landstraßen vorgesehen und lassen sich nur oberhalb einer bestimmten Grenzgeschwindigkeit von beispielsweise 30 km/h einsetzen. Es sind jedoch fortgeschrittene Systeme in Entwicklung, die auch bei niedrigeren Geschwindigkeiten einsetzbar sind, bis hin zum Fahrzeugstillstand, und die, beispielsweise im Stop and Go Verkehr, auch ein automatisches Bremsen des Fahrzeugs in den Stand sowie unter bestimmten Bedingungen auch ein automatisches Wiederanfahren des Fahrzeugs ermöglichen. Solche Systeme werden als "Full-Speed Range ACC" (ACC-FSR) oder "ACC / Stop & Go" bezeichnet.

Geschwindigkeitsregler der eingangs genannten Art werden beschrieben in EP-A-0 906 845, DE 196 00 734 A1 und EP-A-1426 911.

### Vorteile der Erfindung

Die Erfindung mit den in Anspruch 1 angegebenen Merkmalen ermöglicht insbesondere bei solchen fortgeschrittenen ACC-Systemen eine Verbesserung des Verkehrsflusses und eine besser an das intuitive Verhalten eines menschlichen Fahrers angepaßte Fahrweise. Zu dem Zweck weist der Geschwindigkeitsregler eine Erkennungseinrichtung auf, die speziell dazu ausgebildet ist, verschiedene vorgegebene Kategorien von Kolonnenfahrtsituationen zu erkennen und das Dynamikprofil an die jeweils erkannte Situation anzupassen.

Unter einer "Kolonnenfahrtsituation" soll hier allgemein eine Situation verstanden werden, in der mehrere Fahrzeuge in derselben Spur hintereinander fahren oder stehen, wobei das eigene, mit dem ACC-System ausgerüstete Fahrzeug eines der Fahrzeuge dieser Kolonne ist. Ein typisches Beispiel für eine solche Kolonnenfahrtsituation ist etwa ein Stau auf einer Autobahn. Ein anderes Beispiel ist, im Stadtverkehr, das Warten in einer Ampelschlange. Diese beiden Beispiels stellen zugleich Beispiele für zwei verschiedene Kategorien von Kolonnenfahrtsituationen dar, in denen jeweils ein anderes Dynamikprofil verwendet werden sollte.

Bei einem Stau oder bei zähflüssigem Verkehr empfiehlt sich ein Profil mit einer geringen Dynamik, also insbesondere mit geringer Maximalbeschleunigung und großer Zeitlücke. Eine hohe Dynamik, also schnelles Aufschließen und relativ dichtes Auffahren auf das Vorderfahrzeug, führt hier nämlich insbesondere bei längeren Kolonnen und vor allem, wenn eine Mehrzahl der Kraftfahrer in der Kolonne sich so verhält, leicht zu einem sogenannten "Ziehharmonikaeffekt", d. h., Phasen, in denen die Fahrzeuge relativ weit auseinandergezogen sind, wechseln mit Phasen ab, in denen die Fahrzeuge dicht auffahren und relativ scharf abgebremst werden müssen, wobei es leicht zu Auffahrunfällen kommen kann. Häufig entsteht in solchen Situationen eine Stauwelle, die sich entgegen der Fahrtrichtung ausbreitet und sich aufgrund verzögerter Reaktionen der beteiligten Fahrzeuge ständig verstärkt, bis hin zum völligen Stillstand. Dies ist das typische Szenario eines Überlastungsstaus auf Autobahnen. Ein Profil mit geringerer Dynamik wirkt hier ausgleichend und trägt so zur Verbesserung des Verkehrsflusses bei. Es entspricht auch eher dem intuitiven Verhalten von erfahreneren menschlichen Fahrern. Außerdem wird durch ein Profil mit geringerer Dynamik der Kraftstoffverbrauch gesenkt.

Demgegenüber ist beim Anfahren aus einer Warteschlange vor einer Ampel oder Kreuzung eher ein dynamischeres Profil angemessen. Hier kann nämlich durch ein zügiges Anfahren und durch ein - in den Grenzen der Verkehrssicherheit - dichteres Aufschließen zum Vorderfahrzeug erreicht werden, daß während einer Grünphase eine größere Anzahl von Fahrzeugen die Kreuzung überqueren können, so daß ein wesentlich größeres Verkehrsaufkommen verkraftet werden kann, ohne daß es zu einem Stau kommt.

Durch die Erfindung wird erreicht, daß in diesen verschiedenen Situationen jeweils automatisch das angemessene Dynamikprofil ausgewählt wird, so daß das Systemverhalten der Intuition und den Erwartungen eines menschlichen Fahrers besser entspricht. Auf diese Weise wird durch die Erfindung die Akzeptanz des ACC-Systems gesteigert und zugleich ein Beitrag zur Verbesserung des Verkehrsflusses geleistet.

Vorteilhafte Ausgestaltungen und Weiterbildungen der Erfindung sind in den Unteransprüchen angegeben.

Bevorzugt weist die Erkennungseinrichtung des Geschwindigkeitsreglers eine Schnittstelle zu einem Navigationssystem auf, so daß anhand der im Navigationssystem verfügbaren Informationen über das Straßennetz und die Position des eigenen Fahrzeugs festgestellt werden kann, ob sich das eigene Fahrzeug auf einer kreuzungsfreien Straße oder etwa vor einer Kreuzung befindet. Auf diese Weise kann die Kolonnenfahrtsituation jeweils der richtigen Kategorie zugeordnet werden.

Wahlweise oder zusätzlich kann zur Erkennung von Kreuzungen und dergleichen jedoch auch auf andere Informationsquellen zurückgegriffen werden, beispielsweise ein Video- und Bildverarbeitungssystem.

Ergänzend kann zur frühzeitigen Erkennung von Stausituationen auch auf die Daten eines Stauinformationssystems zugegriffen werden, etwa Stauinformationen im Verkehrsfunk, über das Mobilfunknetz oder in Zukunft gegebenenfalls auch über ein intelligentes Navigationssystem sowie, sofern ein Videosystem mit Bildverarbeitung vorhanden ist, durch Erkennung von Stauwarnungen auf dynamischen Verkehrssignalanlagen.

### Zeichnung

Ein Ausführungsbeispiel der Erfindung ist in den Zeichnungen
dargestellt und in der nachfolgenden Beschreibung näher erläutert.

Es zeigen:
- Figur 1: ein Blockdiagramm eines adaptiven Geschwindigkeitsreglers, und
- Figuren 2 und 3: Skizzen unterschiedlicher Verkehrssituationen zur Erläuterung der Arbeitsweise des Geschwindigkeitsreglers.

### Beschreibung des Ausführungsbeispiels

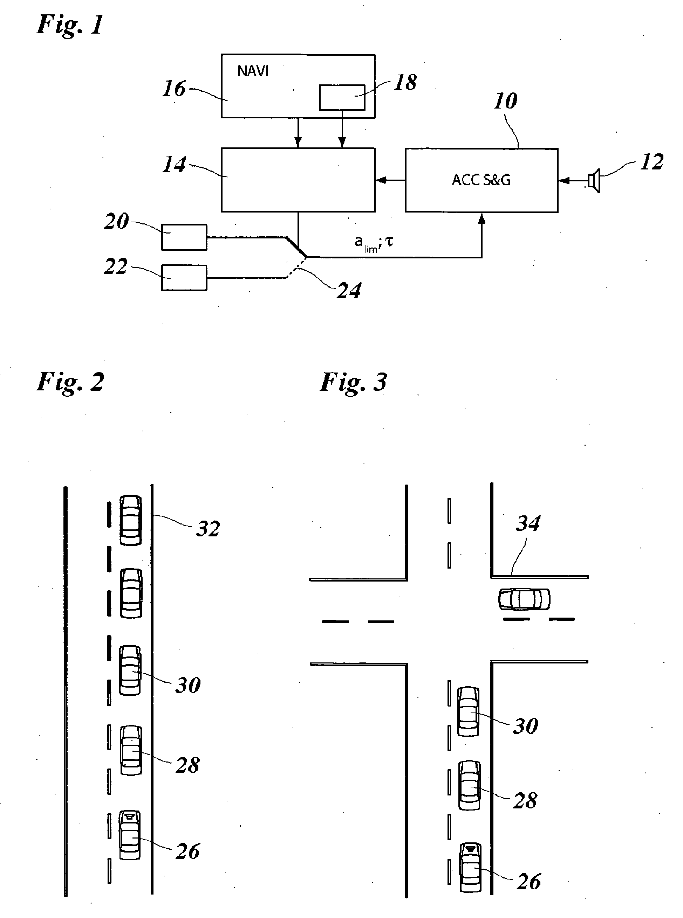

Kernstück des in Figur 1 gezeigten Geschwindigkeitsreglers ist eine an sich bekannte elektronische Reglereinheit 10 mit ACC- und Stop & Go Funktion, die Ortungsdaten über vorausfahrende Fahrzeuge von einem winkelauflösenden Radarsensor 12 erhält und auswertet, um durch Eingriff in das nicht gezeigte Antriebssystem und Bremssystem des Fahrzeugs die Fahrgeschwindigkeit zu regeln. Mit Hilfe des Radarsensors 12 können auch Fahrzeuge auf Nebenspuren geortet werden, und aufgrund des Winkelauflösungsvermögens lassen sich die georteten Fahrzeuge den einzelnen Fahrspuren zuordnen. Durch die statistische Auswertung dieser Daten ist es zumindest bei höherer Verkehrsdichte auch möglich, festzustellen, auf welcher Spur sich das eigene Fahrzeug befindet.

Der Reglereinheit 10 ist eine Erkennungseinrichtung.14 zugeordnet, die dazu dient, verschiedene Verkehrssituationen, darunter insbesondere auch Kolonnenfahrtsituationen, zu erkennen. Bei den Kolonnenfahrtsituationen wird dabei zwischen verschiedenen vordefinierten Kategorien unterschieden, beispielsweise "Stausituation ohne Kreuzung" und "Warteschlange vor einer Kreuzung", und die jeweils erkannte Situation wird durch die Erkennungseinrichtung 14 einer dieser vordefinierten Kategorien zugeordnet. Zu diesem Zweck greift die Erkennungseinrichtung 14 auf die Daten der Reglereinheit 10 zu, einschließlich aufbereiteter Ortungsdaten des Radarsensors 12. Weiterhin weist die Erkennungseinrichtung 14 eine Schnittstelle 16 zu einen im Fahrzeug vorhandenen Navigationssystem sowie eine Schnittstelle 18 zu einem Stauinformationssystem auf, beispielsweise zu einem Verkehrsfunksystem, das hier in das Navigationssystem integriert ist. Anhand der über diese Schnittstellen empfangenen Daten kann die Erkennungseinrichtung 14 beispielsweise erkennen, ob sich das Fahrzeug in einem gemeldeten Stau befindet oder ob ein solcher Stau bevorsteht, ob sich das Fahrzeug vor einer Kreuzung oder einer Autobahnauffahrt befindet, und dergleichen. Im Fall eines intelligenten Navigationssystems, das ständig aktualisierte Daten über die Verkehrsinfrastruktur empfängt, können gegebenenfalls auch Baustellen erkannt werden.

Zu der Erkennungseinrichtung 14 gehört weiterhin ein Speicher, in dem für jede vordefinierte Kategorie von Kolonnenfahrtsituationen mindestens ein Dynamikprofil 20, 22 gespeichert ist. Wahlweise können für eine einzelne Kategorie auch mehrere Dynamikprofile gespeichert sein, die den persönlichen Vorlieben des jeweiligen Fahrers Rechnung tragen. Im hier betrachteten Beispiel sind lediglich zwei Dynamikprofile 20, 22 gezeigt, nämlich eines für eine Stausituation ohne Kreuzung (Figur 2) und eines für eine Warteschlange vor einer Kreuzung (Figur 3).

Jedes Dynamikprofil ist definiert durch einen Satz von Parametern, die die Funktionsweise der Reglereinheit 10 in der betreffenden Situationskategorie bestimmen. Beispiele für solche Parameter sind die Maximalbeschleunigung aₗᵢₘ, das ist die maximale Beschleunigung, mit der das Fahrzeug beschleunigt wird, wenn zu einem seinerseits beschleunigenden vorausfahrenden Fahrzeug aufgeschlossen wird oder wenn die Spur vor dem eigenen Fahrzeug frei geworden ist, sowie die Zeitlücke τ, mit der bei Folgefahrt, bei aktiver Abstandsregelung, das vorausfahrende Fahrzeug verfolgt wird.

In einer erkannten Kolonnenfahrtsituation wählt die Erkennungseinrichtung 14 je nach erkannter Kategorie eines der Dynamikprofile 20, 22 aus, so daß die entsprechenden Parameter aₗᵢₘ, τ in die Reglereinheit 10 eingespeist werden, wie in Figur 1 durch einen Schalter 24 symbolisiert wird. Wenn die erkannte Situation keine Kolonnenfahrtsituation ist, kann der Schalter 24 auch eine Neutralstellung einnehmen, so daß dann die Reglereinheit 10 mit einem Standard-Dynamikprofil arbeitet.

Die Dynamikprofile 20, 22 können wahlweise auch durch nur einen oder mehr als zwei Parameter oder durch komplexere Größen definiert sein. Beispielsweise kann durch einen zusätzlichen Parameter eine Eintauchstrategie für den Fall definiert werden, daß das eigene Fahrzeug vorübergehend die Zeitlücke τ unterschreitet, also etwas in den Sicherheitsabstand zum vorausfahrenden Fahrzeug eintaucht, wenn das vorausfahrende Fahrzeug langsamer wird. Durch eine solche Eintauchstrategie können unkomfortabel hohe Verzögerungen des eigenen Fahrzeugs vermieden und Ungleichmäßigkeiten in der Fahrweise des vorausfahrenden Fahrzeugs ausgeglichen werden.

Anstelle des Parameters aₗᵢₘ kann auch eine Funktion definiert sein, die für jede Differenz zwischen Istgeschwindigkeit und Sollgeschwindigkeit des eigenen Fahrzeugs einen bestimmten Beschleunigungswert oder einen bestimmten Beschleunigungsverlauf vorgibt.

Wahlweise kann ein zusätzlicher Parameter des Dynamikprofils eine vorübergehende Erhöhung der vom Fahrer gewählten Wunschgeschwindigkeit bestimmen. So kann etwa bei hoher Verkehrsdichte bei einem Überholvorgang bestimmt werden, daß die Wunschgeschwindigkeit vorübergehend auf einen Wert erhöht wird, der beispielsweise 5 km/h über der Absolutgeschwindigkeit des überholten Fahrzeugs liegt, damit der Überholvorgang abgekürzt wird.

Die in Figur 2 dargestellte Verkehrssituation entspricht einer Kolonnenfahrt in einem Stau oder bei zähfließendem Verkehr auf einer kreuzungsfreien Straße. Das mit dem Geschwindigkeitsregler nach Figur 1 ausgerüstete Fahrzeug 26 ist eines der Fahrzeuge in der Kolonne. Mit Hilfe des Radarsensors 12 wird zumindest das unmittelbar vorausfahrende Fahrzeug 28 geortet. Zumeist sind jedoch auch die weiter vorn fahrenden Fahrzeuge 30 nicht vollständig durch das Fahrzeug 28 abgeschattet, so daß sie ebenfalls geortet werden können. Auf diese Weise kann die Erkennungseinrichtung 14 auch dann, wenn keine Staumeldung vorliegt, eine Kolonnenfahrtsituation erkennen. Im Prinzip genügt es für die Erkennung einer Kolonnenfahrtsituation bereits, daß das unmittelbar vorausfahrende Fahrzeug 28 für einen längeren Zeitraum mit einer Geschwindigkeit fährt, die deutlich unter der eingestellten Wunschgeschwindigkeit liegt. Anhand der Daten des Navigationssystems läßt sich außerdem feststellen, daß sich das eigene Fahrzeug 26 auf kreuzungsfreien Straße 32 oder zumindest auf einem kreuzungsfreien Abschnitt der Straße befindet. In diesem Fall wählt die Erkennungseinrichtung 14 das Dynamikprofil 20 aus, das durch eine relativ geringe Dynamik gekennzeichnet ist. Dementsprechend hat aₗᵢₘ einen relativ kleinen Wert, während die Zeitlücke t relativ groß ist. Wenn die vorausfahrenden Fahrzeuge 28, 30 beschleunigen, wird deshalb das eigene Fahrzeug 26 dem nur mit einer mäßigen Beschleunigung folgen. Da bei zähfließendem Verkehr auf eine solche Beschleunigungsphase zumeist nach kurzer Zeit wieder eine Verzögerungsphase folgt, wird so für das eigene Fahrzeug 26 eine komfortablere, entspanntere und kraftstoffsparendere Fahrweise erreicht, und zugleich werden die Oszillationen im Verkehrsfluß geglättet. Die vergrößerte Zeitlücke τ sorgt für einen großen Sicherheitsabstand zum vorausfahrenden Fahrzeug, wodurch die Gefahr von Auffahrunfällen vermindert und zugleich Raum für eine Eintauchstrategie geschaffen wird, durch die die Fluktuationen im Vekehrsfluß noch besser ausgeglichen werden können.

Figur 3 illustriert eine Kolonnenfahrtsituation, in der sich das eigene Fahrzeug 26 und die übrigen Fahrzeuge 28, 30 in einer Warteschlange vor einer Kreuzung 34 befinden. Das Vorhandensein der Kreuzung wird anhand der vom Navigationssystem über die Schnittstelle 16 übermittelten Daten erkannt. In dieser Situation wird durch die Erkennungseinrichtung 14 für eine gewisse Zeitspanne, die etwa der Dauer des Anfahrvorgangs der Schlange entspricht, auf das Dynamikprofil 22 umgeschaltet, das durch eine hohe Dynamik gekennzeichnet ist. In diesem Fall werden höhere Beschleunigungen zugelassen, und die Zeitlücke ist verkürzt, so daß das eigene Fahrzeug 26 schneller und dichter zu dem vorausfahrenden Fahrzeug 28 aufschließt, wenn sich die Schlange wieder in Bewegung setzt. Hierdurch wird erreicht, daß in einer vorgegebenen Zeit eine größere Anzahl von Fahrzeugen die Kreuzung 34 passieren kann, und somit wird der Verkehrsfluß verbessert. Dieses Verhalten entspricht auch den Erwartungen und der natürlichen Fahrweise eines menschlichen Fahrers, der in dieser Situation ebenfalls dicht zum Vorderfahrzeug aufschließen wird.

In der in Figur 3 gezeigten Situation kann die Kategorie "Warteschlage vor einer Kreuzung" zumindest bei hoher Verkehrsdichte auch dann erkannt werden, wenn das eigene Fahrzeug 26 das erste Fahrzeug in der Schlange ist und unmittelbar vor der Kreuzung 34 hält. Die nachfolgenden Fahrzeuge können dann zwar nicht unmittelbar geortet werden, doch kann ihr Vorhandensein im allgemeinen unterstellt werden. Ein Maß für die Vekehrsdichte läßt sich durch statistische Auswertung der Ortungsdaten des Radarsensors 12 gewinnen. Bei niedriger Verkehrsdichte, beispielsweise nachts, wenn also anzunehmen ist, daß das eigene Fahrzeug 26 allein vor der Kreuzung 34 hält, kann somit anstelle des Dynamikprofils 22 das Standardprofil gewählt werden, so daß das eigene Fahrzeug langsamer beschleunigt, wenn der Fahrer den Anfahrbefehl gibt. Dadurch wird nicht zuletzt auch die Lärmbelästigung für die Anwohner verringert.

Die oben beschriebenen Kategorien von Kolonnenfahrtsituationen lassen sich noch beträchtlich verfeinern und erweitern. Wenn sich beispielsweise in der Stausituation nach Figur 2 das eigene Fahrzeug 26 und die vorausfahrenden Fahrzeuge 28, 30 auf der linken Spur befinden und Fahrzeuge auf beiden Spuren mit annähernd gleicher Geschwindigkeit fahren, wie es bei einem Stau häufig der Fall ist, kann ein Dynamikprofil gewählt werden, bei dem τ gegenüber dem Dynamikprofil 20 verringert ist, damit ein Einscheren von Fahrzeugen von der rechten Spur in den Sicherheitsabstand vermieden wird.

Eine weitere denkbare Verfeinerung besteht darin, daß in Stausituationen auf Straßen ohne Kreuzung zwischen dem Fahren im Stau und dem Auffahren auf das Stauende einerseits und der Auflösung des Staus andererseits unterschieden wird, beispielsweise anhand der Daten des Stauinformationssystems. Ein Kriterium für die Kategorie "Auflösung des Staus" kann auch darin bestehen, daß die vorausfahrenden Fahrzeuge auf der linken Spur beschleunigen und die rechte Spur frei ist. In dieser Situation ist es zweckmäßig, auf ein Profil mit höherer Dynamik umzuschalten, damit die Auflösung des Staus beschleunigt wird.

Weitere denkbare Kategorien, die anhand der Daten des Radarsensors und/oder anhand der Daten eines intelligenten Navigationssystems erkannt werden können, sind Fahrbahnverengungen von zwei Spuren auf eine Spur, etwa an Baustellen, sowie Fahrbahnerweiterungen von einer Spur auf zwei Spuren. In diesem Fall wird vor einer Fahrbahnverengung ein Profil mit geringer Dynamik und mit besonders großer Zeitlücke τ gewählt, damit das Einfädeln der Fahrzeuge nach dem Reißverschlußprinzip erleichtert wird. Beim Verlassen der Baustelle wird dann auf ein Profil mit höherer Dynamik umgeschaltet, damit der Verkehrsfluß verbessert wird.

Ebenso ist es denkbar, im Bereich von Autobahnanschlußstellen die Zeitlücke τ zu vergrößern, damit Spurwechsel für auffahrende oder abbiegende Fahrzeuge erleichtert werden. Gemäß einer Variante wird die Zeitlücke τ bei Fahrten auf der rechten Spur im Bereich von Autobahnauffahrten nur dann vergrößert, wenn auf dem Beschleunigungsstreifen ein Fahrzeug geortet wird, dessen Abstand größer als ein bestimmter Mindestabstand ist. Ist der Abstand des Fahrzeugs auf dem Beschleunigungsstreifen dagegen kleiner als ein bestimmter unterer Grenzwert, kann im Gegenteil die Zeitlücke verkürzt und die Beschleunigung erhöht werden, um dem auffahrenden Fahrzeug das Einfädeln hinter dem eigenen Fahrzeug zu erleichtern.

## Patentansprüche

1. Adaptiver Geschwindigkeitsregler mit einer Erkennungseinrichtung (14) zur Erkennung verschiedener vorgegebener Kategorien von Fahrtsituationen und zur Auswahl eines an die erkannte Situation angepaßten Dynamikprofils (20, 22), **dadurch gekennzeichnet,**
- **daß** die Erkennungseinrichtung (14) dazu ausgebildet ist, mindestens zwei verschiedenen Kategorien von Kolonnenfahrtsituationen zu unterscheiden, nämlich einer Stausituation auf einer kreuzungsfreien Straße (32) und einer Warteschlangensituation vor einer Kreuzung (34) oder Einmündung,
- **daß** die zur Auswahl stehenden Dynamikprofile (20, 22) sich in mindestens einem der folgenden Parameter unterscheiden:
- einem Parameter aₗᵢₘ, der das Beschleunigungsverhalten des eigenen Fahrzeugs (26) bei Geschwindigkeitsänderungen vorausfahrender Fahrzeuge (28) oder beim Freiwerden der eigenen Fahrspur bestimmt,
- einer Zeitlücker mit der im Rahmen der Abstandsregelung ein vorausfahrendes Fahrzeug (28) verfolgt wird,
und **daß** die Erkennungseinrichtung (14) dazu ausgebildet ist, in einer Stausituation ein Dynamikprofil mit kleinerem aₗᵢₘ und/oder größerer Zeitlücker als in der Wartschlangensituation zu wählen.

2. Geschwindigkeitsregler nach Anspruch 1, **dadurch gekennzeichnet, daß** die Erkennungseinrichtung (14) eine Schnittstelle (16) zu einem Navigationssystem aufweist.

3. Geschwindigkeitsregler nach einem der vorstehenden Ansprüche, **dadurch gekennzeichnet, daß** die Erkennungseinrichtung (14) eine Schnittstelle (18) zu einem Stauinformationssystem aufweist.

## Claims

1. Adaptive cruise controller comprising a detection device (14) for detecting various predefined categories of travel situations and for selecting a dynamic profile (20, 22) which is adapted to the detected situation, **characterized**
- **in that** the detection device (14) is designed to differentiate at least two different categories of backed-up traffic situations, namely a traffic jam situation on an intersection-free road (32) and a situation where traffic is waiting in a queue before an intersection (34) or junction,
- **in that** the dynamic profiles (20, 22) which are available for selection differ in at least one of the following parameters:
- a parameter aₗᵢₘ which determines the acceleration behaviour of the driver's own vehicle (26) when there are changes in speed of vehicles (28) travelling ahead or when the driver's own lane becomes free,
- a time interval at which a vehicle (28) travelling ahead is followed within the scope of the inter-vehicle distance cruise control,
and **in that** the detection device (14) is designed to select a dynamic profile with a smaller aₗᵢₘ and/or larger time interval in a traffic jam situation than in the situation where traffic is waiting in a queue.

2. Cruise controller according to Claim 1, **characterized in that** the detection device (14) has an interface (16) with a navigation system.

3. Cruise controller according to one of the preceding claims, **characterized in that** the detection device (14) has an interface (18) with a traffic jam information system.

## Revendications

1. Régulateur de vitesse adaptatif comprenant un dispositif de détection (14) pour détecter différentes catégories prédéfinies de situations de conduite et pour sélectionner un profil dynamique (20, 22) adapté à la situation détectée, **caractérisé en ce**
- **que** le dispositif de détection (14) est configuré pour différencier au moins deux catégories différentes de situations de circulation pare-choc contre pare-choc, à savoir une situation d'embouteillage sur une route sans intersection (32) et une situation de file d'attente avant une intersection (34) ou un débouché,
- **que** les profils dynamiques (20, 22) disponibles à la sélection se différencient au niveau d'au moins l'un des paramètres suivants :
- un paramètre aₗᵢₘ qui détermine le comportement d'accélération du véhicule propre (26) lors des modifications de la vitesse des véhicules qui précèdent (28) ou lorsque la voie de circulation propre devient libre,
- un intervalle de temps T avec lequel est suivi un véhicule qui précède (28) dans le cadre de la régulation de la distance,
et en ce que le dispositif de détection (14) est configuré, dans une situation d'embouteillage, pour sélectionner un profil dynamique ayant un aₗᵢₘ plus petit et/ou un intervalle de temps plus grand que dans les situations de file d'attente.

2. Régulateur de vitesse selon la revendication 1, **caractérisé en ce que** le dispositif de détection (14) présente une interface (16) vers un système de navigation.

3. Régulateur de vitesse selon l'une des revendications précédentes, **caractérisé en ce que** le dispositif de détection (14) présente une interface (18) vers un système d'information d'encombrements.
